# EUROPEAN PATENT APPLICATION

(11) **EP 4 848 208 A1**
(43) Date of publication of application: **02.12.2026**
(21) Application number: 26181071.7
(22) Date of filing: 26.05.2026
(51) Int. Cl.: G06T 7/55, G06T 7/579

(54) **SYSTEM FOR CAPTURING IMAGES OF OPEN OR CLOSED SPACES AND SUBSEQUENT PROCESSING AND SYSTEM OPERATING METHOD**

(30) Priority: 28.05.2025 IT 202500012289
(71) Applicant: Italdron Air Service Srl, 47814 Bellaria-Igea Marina (RN) (IT)
(72) Inventor: BARBERINI, Marco, 47814 Bellaria-Igea Marina (RN) (IT); MARANO, Valerio, 48123 Ravenna (IT); ROVITUSO, Gianluca, 47814 Bellaria-Igea Marina (RN) (IT)
(74) Representative: Botti & Ferrari S.p.A.

(57) **Abstract**

A system (S) for capturing one or more images of an open or closed space (A) by an operator and related processing, comprising a plurality of capturing devices (1) for simultaneously capturing at least one image of said space (A), at least one logic control unit (U), operatively connected to said plurality of capturing devices (1), able to receive said at least one captured image, said logic control unit (U) being provided with a processing program (P), for processing said at least one image, capable of processing said at least one image to obtain a three-dimensional model and/or an orthophoto.

## Description

### Field of application

The present invention relates to a system for capturing or surveying images pertaining to artificial and natural tunnels or pertaining to open spaces and to the subsequent processing.

The present invention also relates to the operating method of the system.

More in detail, the invention relates to a system and a method of the said type, devised and implemented particularly to allow surveying images inside artificial and natural tunnels adapted to vehicular and rail transit and the like, and subsequent processing, to perform a periodic inspection that allows monitoring the progress of any structural deterioration and presence of added ancillary elements, such as fire extinguishers, signs, signals, or emergency columns and the like.

Hereinafter the description will be addressed to a moving system for capturing images of tunnels, but it is well clear that the same should not be considered limited to this specific use, since the system may also be used in open spaces.

### Prior art

Currently it is known that there are systems and methods for carrying out detailed surveys in tunnels and underpasses mounted on vehicles or vans, equipped with lighting devices, which, by travelling along the tunnel road at a variable speed between 4 and 10 km/h, allow capturing images of the current state of the structures.

Usually, the known systems are of the laser scanner type and allow obtaining a georeferenced point cloud.

There are also systems that capture point cloud images in the RGB format - Red, Green, Blue, and/or thermographic images.

The drawbacks associated with these known systems relate to very long capturing times, the need for expensive equipment, the need to close tunnels to the traffic since the average speed of the moving vehicle is of 4-10 km/h, and the long data processing times.

There are also systems in which the image-capturing device moves at higher speeds, but the quality of the reconstructed image is poor.

In light of the drawbacks and unsolved prior art issues, an object of the present invention is to provide a system for capturing images that allows a standard-speed moving capture for a vehicle travelling through a tunnel.

A further object of the present invention is to provide a system that allows processing the captured images, aimed at an analysis.

Still an object of the present invention is to provide a method for operating the system.

Therefore, the technical problem of the present invention is to capture moving images at a standard road vehicle speed and a subsequent processing.

### Summary of the invention

The idea underlying the present invention is to provide a system for capturing moving images, particularly of closed spaces, on a vehicle and process them in order to obtain an analysable three-dimensional model.

An object of the present invention is a system for capturing one or more images of an open or closed space by an operator and related processing, comprising a plurality of capturing devices for simultaneously capturing at least one image of said space, at least one logic control unit, operatively connected to said plurality of capturing devices, able to receive said at least one captured image, said logic control unit being provided with a processing program, for processing said at least one image, capable of processing said at least one image to obtain a three-dimensional model and/or an orthophoto.

Further according to the invention, said system may be installed on a moving vehicle, by means of a stabilized supporting element, and may be able to capture said at least one image, while moving.

Preferably according to the invention, said plurality of capturing devices is able to capture a plurality of images of said space with a frequency of automated shooting depending on the movement speed of said vehicle.

Still according to the invention, said plurality of capturing devices comprises three or four cameras oriented based on the morphology of said space.

Yet according to the invention, said logic control unit is connected via cable to said plurality of capturing devices.

Further according to the invention, said logic control unit is wirelessly connected to a said plurality of capturing devices.

Preferably according to the invention, said system may comprise a displaying unit, operatively connected to said plurality of capturing devices, able to display the portion of said space framed by said plurality of capturing devices.

Still according to the invention, said system may comprise a lighting device, able to illuminate said space, while said plurality of capturing devices captures said at least one image.

A further object of the present invention is a method for operating a system for capturing one or more images of an open or closed space by an operator and related processing comprising the following steps:
110. receiving one or more images by said program;
120. extracting key points from said one or more images for subsequent processing, by means of said program;
130. generating a point cloud associated with said one or more images, by means of said program;
140. transforming said point cloud into a 3D mesh by means of said program;
150. producing a texture on said 3D mesh, in order to obtain a textured 3D mesh, by means of said program; and
160. generating a three-dimensional model and/or an orthophoto corresponding to said textured 3D mesh, by means of said program, for analysing said space.

### Brief description of the drawings

In the drawings:
- figure 1 shows an axonometric schematic view of the system for capturing images of open or closed spaces and subsequent processing, object of the present invention;

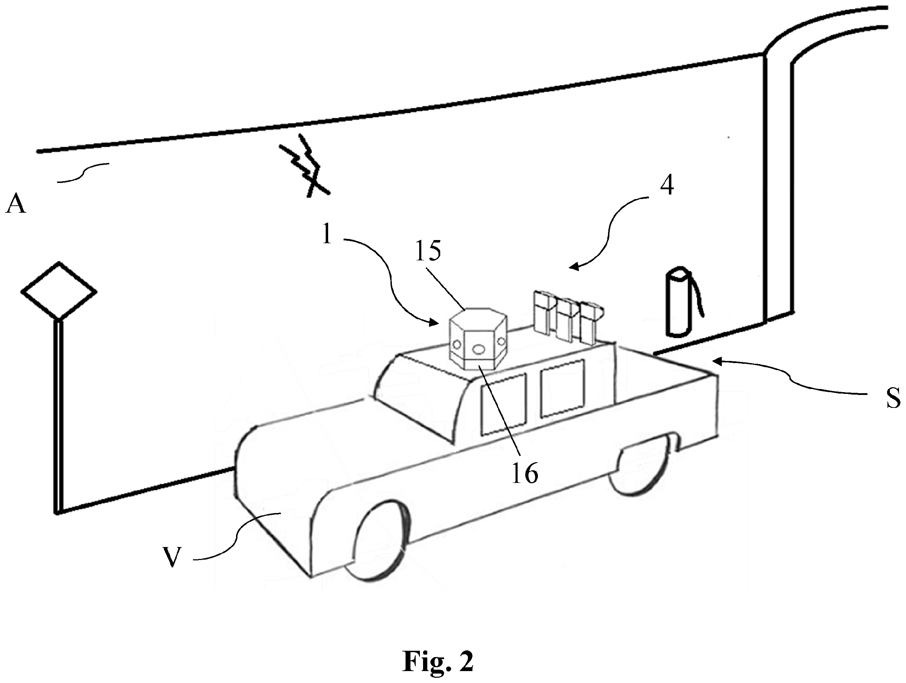

- figure 2 shows an axonometric view of the system of figure 1 installed on a vehicle; and

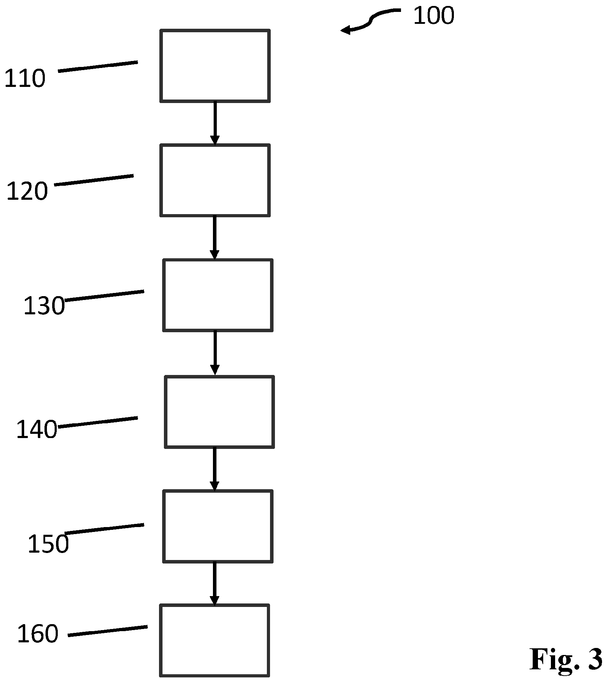

- figure 3 shows a view of the block diagram of the method for operating the system, object of the present invention.

### Detailed description

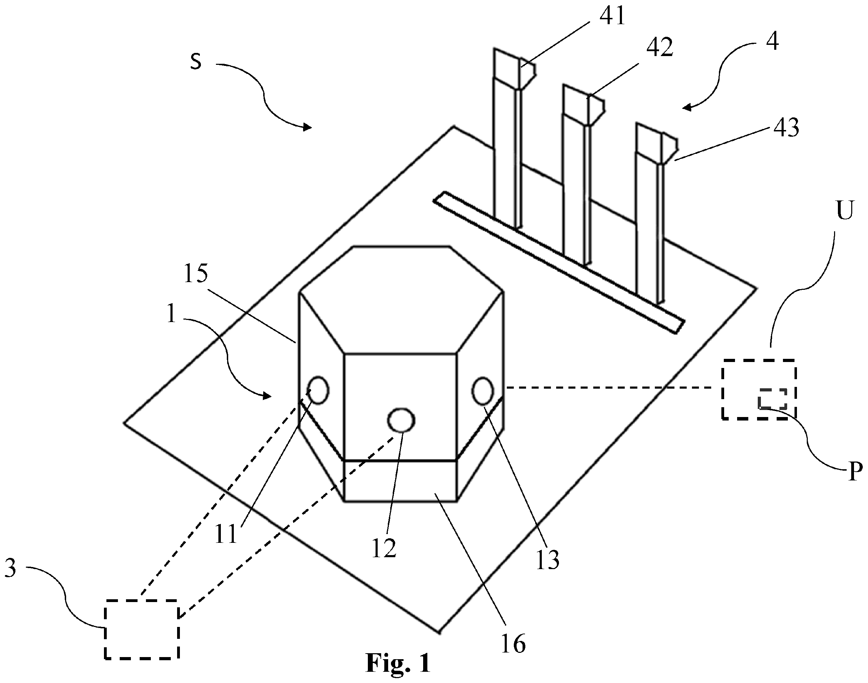

Referring to figure 1, a system S for capturing images of open or closed spaces A and subsequent processing, object of the present invention, is noted.

The system S substantially comprises a plurality of capturing devices 1, for capturing at least one image of said space A, at least one logic control unit U, operatively connected to said plurality of capturing devices 1, able to receive said at least one captured image.

Particularly, said open or closed space A is an artificial or natural tunnel used for vehicular/road or rail transit or the like.

Without departing from the scope of protection of the present invention, said space A may also be an open space such as a field, a mountain or city landscape, or the like.

Said plurality of capturing devices 1 comprises a first camera 11, a second camera 12, a third camera 13, and a fourth camera 14.

Without departing from the scope of protection of the present invention, said plurality of capturing devices 1 may comprise a higher or lower number of cameras.

Said cameras 11, 12, 13, 14 are integrated in a supporting structure 15 so as to be separated from each other in order to cover different and contiguous portions of said space A and to be faced upwards and sideways.

Said cameras 11, 12, 13, 14 capture at least one image simultaneously, in order to capture the image from multiple angles, at the same time.

Capturing the images occurs according to the RGB (Red, Green, Blue) model.

Said cameras 11, 12, 13, 14 may also comprise a 3D scanning module with a LiDAR - Laser Imaging Detection and Ranging - system, able to measure the distance from an object by using a laser.

Particularly, the LIDAR system may be of the SLAM - Simultaneous localization and mapping - type.

The LIDAR system is a remote sensing tool that allows determining the distance of an object or a surface by using a laser pulse. The distance of the object is determined by measuring the time elapsed between the emission of the pulse and the reception of the backscattered signal. The source of a LIDAR system is a laser, that is, a coherent beam of light at a precise wavelength, sent towards the space A to be observed.

Said supporting structure 15 may be installed on a moving vehicle V, by means of a stabilized supporting element 16, so that said cameras 11, 12, 13, 14 capture the images, while moving.

Usually the operator drives the vehicle V in the space A at a speed of 40-60 Km/h.

In this case, said plurality of capturing devices 1 is able to capture a plurality of images of said space A with a frequency of automated shooting depending on the movement speed of said vehicle V.

Said capturing device 1 is able to capture the images of the space A with an overlap of approximately 70% - 80%, correlating the shooting frequency of the cameras 11, 12, 13, 14 with the travel speed of the vehicle V, the higher the speed, the higher the shooting frequency.

The shooting frequency of the cameras 11, 12, 13, 14 also depends on the hardware of the cameras themselves.

Said system S according to any one of the preceding claims comprises a logic control unit U that is connected via cable to said plurality of capturing devices 1, so as to exchange data.

Particularly, each of said cameras 11, 12, 13, 14 is connected to said logic control unit U.

Without departing from the scope of protection of the present invention, said logic control unit U may also be connected wirelessly to said plurality of capturing devices 1, for transmitting said plurality of detected images.

Said logic control unit may be integrated in a device such as a PC or a tablet, or a smartphone.

Said logic control unit U may also be a remote unit of the cloud type.

Said logic control unit U is provided with a program P for processing said at least one image that is able to receive said one or more images as input, process them and provide a photogrammetric model of the space A as output, as will be described in detail hereinafter.

Particularly, said program P is a photogrammetry program.

Photogrammetry allows obtaining reliable information about the space A and objects within the space A, such as road signs, signals, fire extinguishers, cracks, deterioration, through the process of recording, measuring and interpreting photographic images and patterns of electromagnetic radiation images and other phenomena.

Said system S comprises a displaying unit 3, or monitor, operatively connected to said plurality of capturing devices 1, so that said operator is able to display the portion of said space A framed by said plurality of capturing devices 1.

Said displaying unit 3 is usually placed on board the vehicle V.

Without departing from the scope of protection of the present invention, said displaying unit 3 may also be housed in a remote space that is distant from the space A where the image capturing occurs.

Said system S comprises a lighting device 4 able to illuminate said space A while said plurality of capturing devices 1 capture said at least one image.

Particularly, said lighting device 4 comprises a first light 41, a second light 42, and a third light 43.

Without departing from the scope of protection of the present invention, said lighting device 4 may also comprise a lower or higher number of lights.

The operation of the system S for capturing images of open or closed spaces S and subsequent processing, object of the present invention, is as follows.

An operator places the system S onto a vehicle V, by means of said supporting element 16.

He/she starts driving the vehicle V along a route inside said space A, typically a road tunnel.

The plurality of capturing devices 1 starts capturing the images simultaneously and according to a capturing frequency, depending on the movement speed of the vehicle V.

Particularly, each of said first 11, second 12, third 13, and fourth 14 cameras capture an image from a certain angle, at the same capturing instant.

Said images are transmitted manually or via cable or wirelessly, particularly by means of a connection of the Bluetooth^{TM} type, to said logic control unit U.

Particularly, it is possible for said cameras 11, 12, 13, and 14 to comprise a detachable memory module able to store the images and then connectable to the electronic device that contains the logic control unit U, so that the electronic device may directly read the images from the memory module.

The processing program P present in said logic control unit U implements the following method 100.

In a step of receiving 110 one or more images, said program P receives the images captured by the system S.

In a step of data extraction 120, the images are automatically aligned in the space, so as to extract the key points, necessary to match the images with each other and for the subsequent processing.

In a calculation step 130, a point cloud is generated.

A point cloud is a set of given points in a 3D space, each characterized by spatial coordinates (x, y, z) that indicate the position thereof in the space and by possible intensity values, such as colour or depth. These points represent the surface of an object inside the space A and portions of the space A itself.

In a transformation step 140, the point cloud is transformed into a 3D mesh, which is a continuous surface made of polygons whose vertices are the characteristic points of the point cloud itself.

In an adding step 150, on the 3D mesh generated in the preceding step, a texture is added, namely the 3D mesh is texturized, in order to return the colours by applying the relief images onto the polygons of the 3D mesh, or by transferring the colour from the point cloud to the 3D mesh.

In a final step 160, from the textured 3D mesh a three-dimensional model and/or an orthophoto is generated, which may be considered equivalent to a geographical map of the space A.

The three-dimensional model and/or orthophoto may be provided as input to a GIS - Geographic Information System - system or CAD - Computer Aided Design and Drawing, for a specific analysis of the space A and for a comparison over time of the images detected in the past.

The three-dimensional model and/or orthophoto may also be provided to an image management and analysis program by means of Artificial Intelligence.

As is clear from the above-reported description, the advantage of the system object of the present invention is to detect moving images of spaces, mainly closed spaces such as tunnels, and to obtain a model on which it is possible to carry out analyses of the evolution of the state of space over time.

Obviously, a person skilled in the art, in order to meet contingent and specific requirements, may make numerous modifications and variations to the support above described, all included in the scope of protection of the invention as defined by the following claims.

## Claims

1. A system (S) for capturing one or more images (I) of an open or closed space (A) by an operator and related processing, **characterized**
**in that** it comprises a plurality of capturing devices (1) for simultaneously capturing at least one image (I) of said space (A),
**in that** it comprises at least one logic control unit (U), operatively connected to said plurality of capturing devices (1), able to receive said at least one captured image (I),
**in that** said logic control unit (U) is provided with a processing program (P), for processing said at least one image (I), capable
receiving one or more images by said program (P);
extracting key points from said one or more images for further processing, by said program (P);
generating a point cloud associated with said one or more images, by said program (P);
transforming said point cloud into a 3D mesh, by said program (P);
producing a texture on said 3D mesh, in order to obtain a textured 3D mesh, by said program (P); and
generating a three-dimensional model and/or an orthophoto corresponding to said textured 3D mesh, by said program (P) for analysing said space (A).

2. System (S) according to the preceding claim, **characterized**
**in that** it can be installed on a moving vehicle (V) by means of a stabilized supporting element (16), and
**in that** it is able to capture said at least one image (I), while moving.

3. System (S) according to any one of the preceding claims, **characterized in that** said plurality of capturing devices (1) is able to capture a plurality of images (I) of said space (A) with a frequency of automated shooting depending on the movement speed of said vehicle (V).

4. System (S) according to any one of the preceding claims, **characterized in that** said plurality of capturing devices (1) comprises three or four cameras (11, 12, 13, 14) oriented based on the morphology of said space (A).

5. System (S) according to any one of the preceding claims, **characterized in that** said logic control unit (U) is connected via cable to said plurality of capturing devices (1).

6. System (S) according to any one of claims 1-4, **characterized in that** said logic control unit (U) is wirelessly connected to said plurality of capturing devices (1).

7. System (S) according to any one of the preceding claims, **characterized in that** it comprises a displaying unit (3), operatively connected to said plurality of capturing devices (1), able to display the portion of said space (A) framed by said plurality of devices (1).

8. System (S) according to any one of the preceding claims, **characterized in that** it comprises a lighting device (4), able to illuminate said space (A), while said plurality of capturing devices (1) captures said at least one image.

9. A method (100) for operating a system (S) for capturing one or more images of an open or closed space (A) by an operator and related processing according to any one of claims 1-8, comprising the following steps:
110. receiving one or more images by said program (P);
120. extracting key points from said one or more images for further processing, by said program (P);
130. generating a point cloud associated with said one or more images, by said program (P);
140. transforming said point cloud into a 3D mesh, by said program (P);
150. producing a texture on said 3D mesh, in order to obtain a textured 3D mesh, by said program (P); and
160. generating a three-dimensional model and/or an orthophoto corresponding to said textured 3D mesh, by said program (P) for analysing said space (A).
